# EUROPÄISCHE PATENTSCHRIFT

(11) **EP 4 087 741 B1**
(45) Veröffentlichungstag und Bekanntmachung des Hinweises auf die Patenterteilung: **23.04.2025**
(21) Anmeldenummer: 20817336.9
(22) Anmeldetag: 02.12.2020
(51) Int. Cl.: B60C 11/13, B60C 11/03

(54) **FAHRZEUGLUFTREIFEN**
PNEUMATIC TYRE FOR A VEHICLE
PNEU POUR UN VÉHICULE

(30) Priorität: 10.01.2020 DE 102020200265
(43) Veröffentlichungstag der Anmeldung: 16.11.2022
(73) Patentinhaber: Continental Reifen Deutschland GmbH, 30175 Hannover (DE)
(72) Erfinder: BEHR, Ulrich, 30165 Hannover (DE); SOO, Zi-Jie, 30165 Hannover (DE)
(74) Vertreter: Continental Corporation
(86) Internationale Anmeldenummer: PCT/EP2020/084284
(87) Internationale Veröffentlichungsnummer: WO 2021/139929

(56) Entgegenhaltungen:
- WO-A1-2019/086153
- DE-A1- 102015 200 360
- JP-A- 2001 322 407
- JP-A- 2012 020 604
- KR-A- 20130 057 259

## Beschreibung

Die Erfindung betrifft einen Fahrzeugluftreifen mit einem Laufstreifen mit zumindest einer, insbesondere gerade verlaufenden, auf Profiltiefe ausgeführten, von Rillenflanken und einem im Querschnitt U-förmigen Rillengrund begrenzten Umfangsrille mit einer an der Laufstreifenperipherie in axialer Richtung ermittelten Breite, wobei am Rillengrund, gegebenenfalls unter Anbindung an die Rillenflanken, eine Anzahl von über den Umfang der Umfangsrille verteilt angeordneten, einander in axialer Richtung paarweise gegenüberliegenden Vorsprüngen ausgebildet ist, zwischen welchen jeweils ein auf Profiltiefe reichender, eine Engstelle aufweisender Rillenpfad der Umfangsrille verläuft, welcher bezüglich einer Ebene symmetrisch gestaltet ist, die von der radialen Richtung und einer in Draufsicht Senkrechten auf die Mittellinie der Umfangsrille aufgespannt ist,
wobei die Vorsprünge an den Rillenflanken oder am Rillengrund in Umfangsrichtung auslaufen und derart verlaufen, dass der Rillenpfad bezüglich einer von der Mittellinie der Umfangsrille und der radialen Richtung aufgespannten zweiten Ebene symmetrisch verläuft und sich, in Draufsicht betrachtet, aus zwei trichterartig zur Engstelle verengenden Venturiabschnitten zusammensetzt,
wobei die Venturiabschnitte einander zugewandte Endabschnitte aufweisen, welche gemeinsam einen in Draufsicht in Umfangsrichtung langgestreckten Pfadabschnitt des Rillenpfades bilden, wobei sich die Engstelle des Rillenpfades im Pfadabschnitt befindet oder durch diesen gebildet ist.

Es ist bekannt, in Umfangsrillen von Laufstreifen von Fahrzeugluftreifen als Abriebindikatoren dienende oder als Schallbrecher wirkende Vorsprünge auszubilden. Als Schallbrecher wirkende Vorsprünge vermindern während des Fahrbetriebes die Ausbreitung von sich vor allem in gerade verlaufenden Umfangsrillen ausbildenden Schallwellen, deren Frequenzen in einem für Menschen wahrnehmbaren Bereich liegen. Abriebindikatoren dienen bekannter Weise insbesondere zur Anzeige der gesetzlich vorgeschriebenen Mindestprofiltiefe.

Ein Fahrzeugluftreifen der eingangs genannten Art ist beispielsweise aus der KR 2013 005 725 9 B1 bekannt. Der Laufstreifen dieses Fahrzeugluftreifens weist eine Umfangsrille auf, in welcher einander in axialer Richtung paarweise gegenüberliegende, in Draufsicht kreissegmentförmige Vorsprünge ausgebildet sind. Zwischen den Vorsprüngen verbleibt jeweils ein Rillenpfad aus zwei sich trichterartig verengenden Venturiabschnitten, deren Endabschnitte einen in Umfangsrichtung langgestreckten Pfadabschnitt des Rillenpfades bilden, wobei sich im Pfadabschnitt eine Engstelle des Rillenpfads befindet. Die Vorsprünge sollen das Reifen-Fahrbahn-Geräusch unter Aufrechterhaltung einer guten Aquaplaningperformance reduzieren.

Aus der WO 2019/086153 A1 ist ein Nutzfahrzeugreifen mit einem Laufstreifen mit einer Umfangsrille bekannt, auf deren Rillengrund über den Umfang verteilt und mittig positionierte, als Steinauswerfer wirkende Grundanhebungen ausgebildet sind. Die Grundanhebungen können die Rillenflanken kontaktieren oder von diesen in axialer Richtung beabstandet sein und sind in radialer Richtung jeweils von einer Deckfläche mit einem umlaufenden Flächenrand begrenzt, zu welchem die Deckfläche abfällt. Die Rillenwände weisen seitlich der Grundanhebungen in Draufsicht konvex zueinander gekrümmte Wandabschnitte auf, wobei der Flächenrand der Deckfläche dem Verlauf der konvex zueinander gekrümmten Wandabschnitte derart folgt, dass die Breite der Grundanhebungen jeweils zu ihren Umfangsenden abnimmt.

Aus der DE 10 2014 218 871 A1 ist ein Fahrzeugluftreifen mit einem Laufstreifen mit einer Umfangsrille bekannt, in welcher als Schallbrecher wirkende, in axialer Richtung paarweise gegenüberliegenden Vorsprünge ausgebildet sind, wobei der eine Vorsprung ein kleineres Volumen aufweist als der andere Vorsprung. Der kleinere Vorsprung liegt einer im größeren Vorsprung ausgebildeten, diesen in radialer Richtung durchsetzenden, im Querschnitt parallel zur Laufstreifenperipherie U-förmigen Aussparung gegenüber. Bei Sicht in Längsrichtung durch die Umfangrille verbleibt zwischen den Vorsprüngen ein Abstand von 2,0 mm bis 3,0 mm.

Es bestehen fortlaufend Bemühungen, die in Umfangsrillen vorgesehenen, als Schallbrecher und/oder Abriebindikator wirkenden Vorsprünge im Hinblick auf ihren Einfluss auf das Wasserableitvermögen der Umfangsrille weiter zu optimieren, insbesondere um die beim Fahren auf nasser Fahrbahn bestehende Aquaplaninggefahr zu reduzieren.

Der Erfindung liegt daher die Aufgabe zugrunde, bei einem Fahrzeugluftreifen der eingangs genannten Art die Vorsprünge in einer im Hinblick auf das Wasserableitvermögen der Umfangsrille günstigeren Weise zu gestalten.

Gelöst wird die gestellte Aufgabe erfindungsgemäß dadurch, dass der Pfadabschnitt in Umfangsrichtung eine Länge von 25% bis 35% der in Umfangsrichtung gemessenen maximalen Länge des Rillenpfades aufweist.

Durch die Venturiabschnitte des Rillenpfades zwischen den Vorsprüngen wird beim Fahren auf nasser Fahrbahn durch die Umfangsrille fließendes Wasser im Bereich der Vorsprünge auf verwirbelungsfreie bzw. verwirbelungsarme Weise beschleunigt ("Venturi-Effekt"), sodass das Wasser an den Vorsprünge schneller vorbeigeleitet wird und somit ein nahezu unverändert gutes Wasserableitvermögen im Bereich der Vorsprünge erhalten bleibt. Der Pfadabschnitt ist im Hinblick auf den Venturi Effekt besonders vorteilhaft.

Die Venturiabschnitte sind besonders wirkungsvoll, wenn ihre Breite und/oder Tiefe gemäß den nachfolgenden bevorzugten Ausführungen gewählt bzw. ausgelegt ist bzw. sind. Bevorzugt weisen die Vorsprünge am Rillenpfad jeweils eine Vorsprungkante auf, wobei die Venturiabschnitte an der Engstelle des Rillenpfades eine zwischen den Vorsprungkanten in axialer Richtung ermittelte Breite von mindestens 1,0 mm und höchstens 30% der Breite Umfangsrille aufweisen. Insbesondere beträgt die Breite der Venturiabschnitte an der Engstelle höchstens 25%, vorzugsweise höchstens 20%, der Breite der Umfangsrille. Ferner ist es bevorzugt, wenn die Vorsprungkanten vom Niveau der Profiltiefe in radialer Richtung einen konstanten Abstand von 1,4 mm bis 2,0 mm, insbesondere von 1,6 mm, aufweisen. Die genannten Abmessungen tragen dazu bei, den Venturiabschnitten eine im Hinblick auf den Venturieffekt vorteilhaften Querschnitt zu verleihen.

Gemäß einer weiteren bevorzugten Ausführung weisen die Vorsprünge in radialer Richtung - ermittelt gegenüber dem tiefsten Punkt Umfangsrille - eine konstante Höhe von 1,4 mm bis 2,0 mm, insbesondere von 1,6 mm, auf. Im Bereich solcher Vorsprünge bleibt ein im Hinblick auf das Wasserdrainagevermögen der Umfangsrille vorteilhaftes, relativ großes Rillenleervolumen erhalten.

Auf die Wirkung der Venturiabschnitte wirkt es sich vorteilhaft aus, wenn die Vorsprünge in Umfangsrichtung eine maximale Länge von 150% bis 300%, insbesondere von 180% bis 250%, besonders bevorzugt von 200% bis 230%, der Breite der Umfangsrille aufweisen.

Gemäß einer weiteren bevorzugten Ausführung verlaufen in zumindest einem der an die Umfangsrille angrenzenden Profilpositiven im Bereich der Vorsprünge vor der Umfangsrille endende Querrillen, wobei im Inneren des Profilpositivs zwischen der jeweiligen Querrille und der Engstelle des Rillenpfades ein Kanal verläuft, in welchen ein im Profilpositiv ausgebildeter, sich in radialer Richtung erstreckender, schmäler als der Kanal ausgeführter Einschnitt mit einer Breite von 0,4 mm bis 1,2 mm einmündet. Beim Fahren auf nasser Fahrbahn kann von der Querrille aufgenommenes Wasser durch den Kanal schnell in die Umfangsrille abgeleitet werden, wobei das Wasser der Engstelle des Rillenpfades zugeleitet und daher günstiger Weise wirkungsvoll beschleunigt wird.

Bei dieser Variante ist vorteilhaft, wenn der Kanal den Einschnitt, im Querschnitt betrachtet, an jeder Seite um 0,15 mm bis 2,0 mm, insbesondere um mindestens 0,5 mm, überragt.

Ferner ist es bei dieser Variante von Vorteil, wenn die Querrille, der Kanal und der Einschnitt bezüglich der Ebene, die von der radialen Richtung und der in Draufsicht Senkrechten auf die Mittellinie der Umfangsrille aufgespannt ist, symmetrisch ausgeführt sind.

Die Vorsprünge sind besonders strömungsgünstig ausgeführt, wenn diese in Draufsicht trapezförmig ausgebildet sind, wobei die Trapezbasis am Rillengrund bzw. an der jeweiligen Rillenflanke der Umfangsrille liegt.

Gemäß einer weiteren bevorzugten Ausführung ist auf den Vorsprüngen jeweils ein am Rillengrund und/oder an die jeweilige Rillenflanke angebundener Vorsprungaufsatz ausgebildet, welcher an seinem äußeren Umfang vom zugehörigen Vorsprung überragt ist und welcher in radialer Richtung - ermittelt gegenüber dem tiefsten Punkt der Umfangsrille - eine konstante Höhe von 2,6 mm bis 3,4 mm, insbesondere von 3,0 mm, aufweist, wobei der Vorsprungaufsatz in Draufsicht vorzugsweise die Form eines Trapezes mit einer an der jeweiligen Rillenflanke bzw. am Rillengrund der Umfangsrille liegenden Trapezbasis aufweist. Ein solcher Vorsprungaufsatz zeigt das Erreichen einer insbesondere im Hinblick auf das Wasserdrainagevermögen der Umfangsrille kritischen Restprofiltiefe an.

Es ist ferner günstig, wenn die Paare von Vorsprüngen, welche innerhalb der Umfangsrille in Umfangsrichtung aufeinanderfolgen, insbesondere übereinstimmende gegenseitige Abstände von 10,0 mm bis 70,0 mm, vorzugsweise von mindestens 30,0 mm, aufweisen.

Darüber hinaus ist es günstig, wenn innerhalb der Umfangsrille mindestens fünf Paare von Vorsprüngen ausgebildet sind.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vergrößerte Schrägansicht eines Ausschnittes eines Laufstreifens eines Fahrzeugluftreifens im Bereich einer Umfangsrille mit einer Ausführungsvariante der Erfindung,
Fig. 2 eine Draufsicht auf einen Teil des Ausschnittes aus Fig. 1,
Fig. 3 einen Schnitt entlang der Linie III-III der Fig. 2,
Fig. 4 einen Schnitt entlang der Linie IV-IV der Fig. 2 und
Fig. 5 einen Schnitt entlang der Linie V-V der Fig. 2.

Gemäß der Erfindung ausgeführte Fahrzeugluftreifen sind insbesondere Reifen in Radialbauart für Personenkraftwagen, Vans oder Light-Trucks.

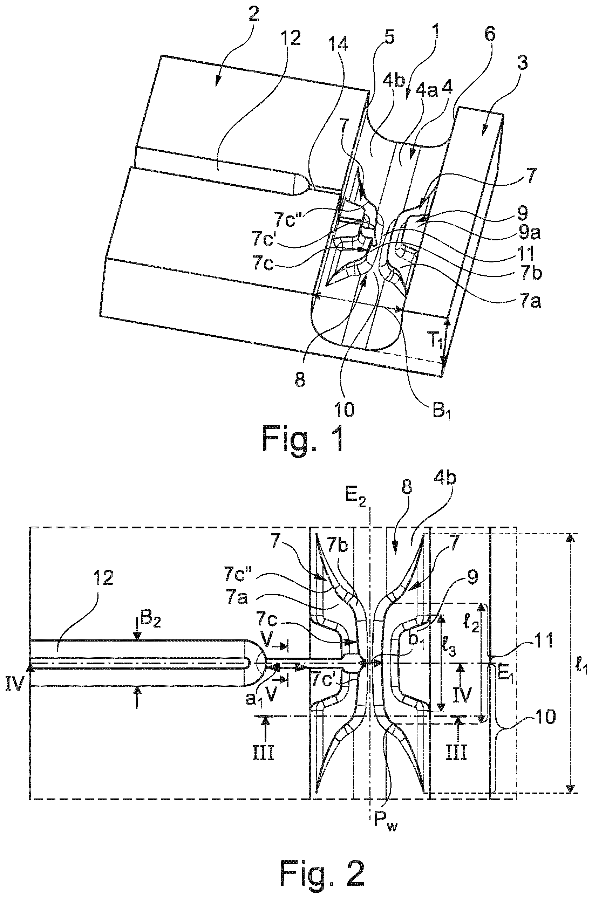

Fig. 1 zeigt eine Ansicht eines Laufstreifenausschnittes im Bereich einer gerade verlaufenden, schulterseitigen Umfangsrille 1, welche eine schulterseitige Profilrippe 2 von einer in Fig. 1 lediglich angedeuteten, mittleren Profilrippe 3 trennt.

Die Umfangsrille 1 ist in radialer Richtung in der für den jeweiligen Reifentyp vorgesehenen Profiltiefe T₁ ausgeführt, welche für PKW, Vans und Light-Trucks üblicherweise 6,5 mm bis 10,0 mm beträgt, und weist an der Laufstreifenperipherie in axialer Richtung eine Breite B₁ von vorzugsweise 6,0 mm bis 13,0 mm, insbesondere von zumindest 9,0 mm, auf. Die Umfangsrille 1 ist durch einen im Querschnitt der Umfangsrille 1 U-förmigen, beim Ausführungsbeispiel flach U-förmigen, Rillengrund 4, eine an der schulterseitigen Profilrippe 2 ausgebildete Rillenflanke 5 und eine an der mittleren Profilrippe 3 ausgebildete Rillenflanke 6 begrenzt. Der Rillengrund 4 setzt sich beim gezeigten Ausführungsbeispiel, im Querschnitt der Umfangsrille 1 betrachtet, aus einem auf Profiltiefe T₁ verlaufenden, zentralen Rillengrundabschnitt 4a und zwei seitlichen Übergangsrundungen 4b zusammen. Die Rillenflanken 5 schließen knickfrei an die Übergangsrundungen 4b an und verlaufen in radialer Richtung, können zu dieser jedoch auch unter übereinstimmenden oder voneinander abweichenden Winkel von bis zu 15°, insbesondere von bis zu 3°, verlaufen.

In dem in Fig. 1 gezeigten Abschnitt der Umfangsrille 1 sind am Rillengrund 4 zumindest Großteils auf den Übergangsrundungen 4b befindliche, in axialer Richtung paarweise und in Umfangsrichtung versatzfrei gegenüberliegende Vorsprünge 7 ausgebildet, zwischen welchen ein eine Engstelle aufweisender, auf Profiltiefe T₁ reichender Rillenpfad 8 verbleibt bzw. verläuft.

Das Paar von Vorsprüngen 7 wirkt als Schallbrecher und dient als Abriebindikator, wobei die Vorsprünge 7 aus dem Gummimaterial des Laufstreifens bestehen. Innerhalb der Umfangsrille 1 ist eine Vielzahl von Vorsprung-Paaren vorgesehen, welche insbesondere derart verteilt angeordnet sind, dass sie voneinander gegenseitige Abstände von 10,0 mm bis 70,0 mm, vorzugsweise von mindestens 30,0 mm, aufweisen. Beim gezeigten Ausführungsbeispiel befindet sich auf jedem Vorsprung 7 ein Vorsprungaufsatz 9, dessen Ausgestaltung später noch genauer erläutert wird.

Gemäß Fig. 2 sind die Vorsprünge 7 und der zwischen ihnen verbleibende Rillenpfad 8 bezüglich einer gemeinsamen, von der axialen Richtung und der radialen Richtung aufgespannten, in Fig. 2 mit der Schnittlinie IV-IV zusammenfallende Ebene E₁ symmetrisch ausgeführt. Ferner sind die Vorsprünge 7 derart gestaltet, dass der Rillenpfad 8 bezüglich einer von der Umfangsrichtung und der radialen Richtung aufgespannten, durch die Mitte der Umfangsrille 1 verlaufenden, zweiten Ebene E₂ symmetrisch ausgeführt ist.

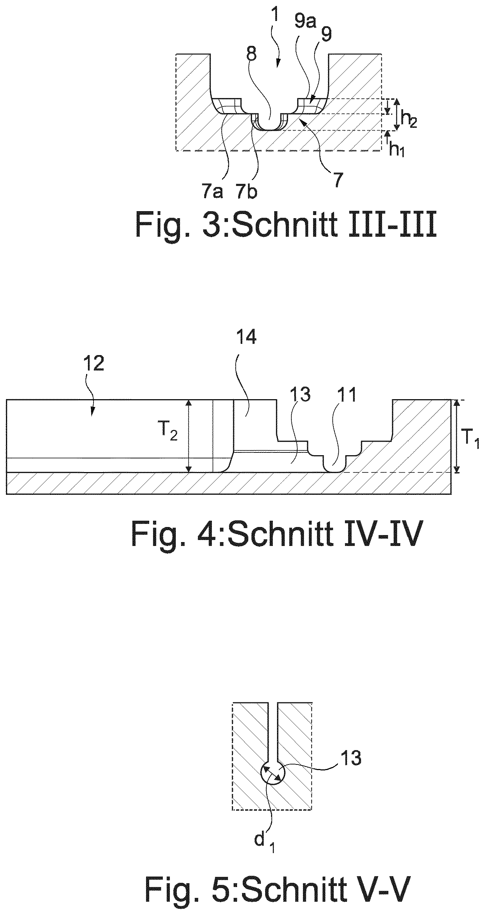

Wie Fig. 1 und Fig. 2 zeigen, sind die Vorsprünge 7 in Draufsicht in Umfangsrichtung langgestreckt sowie gleichschenkelig-trapezartig gestaltet, wobei die Trapezbasis an der jeweiligen Übergangsrundung 4b liegt und wobei die Vorsprünge 7 entsprechend der Trapezform in Umfangsrichtung auslaufen (Fig. 1). Die Vorsprünge 7 weisen in Umfangsrichtung eine maximale Länge I₁ (Fig. 2) von 150% bis 300%, insbesondere von 180% bis 250%, besonders bevorzugt von 200% bis 230%, der Breite B₁ (Fig. 1) der Umfangsrille 1 und in radialer Richtung - ermittelt gegenüber der tiefsten Stelle der Umfangsrille 1 - eine beim gezeigten Ausführungsbeispiel konstante Höhe h₁ (Fig. 3) von 1,4 mm bis 2,0 mm, insbesondere von 1,6 mm, auf. Die Höhe h₁ entspricht daher bevorzugt der in Deutschland vorgeschriebenen, gesetzlichen Mindestprofiltiefe von 1,6 mm. Ferner sind die Vorsprünge 7 in radialer Richtung jeweils durch eine parallel zur Laufstreifenperipherie ausgerichtete Deckfläche 7a (Fig. 1, Fig. 3) begrenzt und weisen den Rillenpfad 8 begrenzende Vorsprungflanken 7b auf, welche über gerundete bzw. knickfrei verlaufende Vorsprungkanten 7c an die Deckflächen 7a anschließen. Die Vorsprungkanten 7c enden an der jeweiligen Übergangsrundung 4b des Rillengrundes 4 und setzen sich jeweils aus einem mittleren Kantenabschnitt 7c' und zwei endseitigen Kantenabschnitten 7c" zusammen, wobei die endseitigen Kantenabschnitte 7c" jeweils über einen Wendepunkt Pw an den mittleren Kantenabschnitt 7c' anschließen (Fig. 3). Die Vorsprungflanken 7b sind über ihre gesamte Erstreckung, im Querschnitt der Umfangsrille 1 betrachtet, zumindest abschnittsweise derart gerundet, dass sie knickfrei in den Rillengrund 4 übergehen (Fig. 3).

Der zwischen den Vorsprüngen 7 gebildete Rillenpfad 8 setzt sich aus zwei, sich jeweils zur erwähnten Engstelle des Rillenpfades 8 trichterförmig bzw. V-förmig verengenden Venturiabschnitten 10 zusammen (siehe insbesondere Fig. 2). Beim gezeigten Ausführungsbeispiel weisen die Venturiabschnitte 10 einander zugewandte Endabschnitte auf, welche gemeinsam einen in Draufsicht gerade verlaufenden, im Querschnitt U-förmigen (Fig. 3), die Engstelle aufweisenden Pfadabschnitt 11 des Rillenpfades 8 bilden (siehe insbesondere Fig. 2).

Die Venturiabschnitte 10 weisen in der Ebene E₁ eine zwischen den Vorsprungkanten 7c ermittelte Breite b₁ (Fig. 2) auf, welche mindestens 1,0 mm und höchstens 30%, insbesondere höchstens 25%, vorzugsweise höchstens 20%, der Breite B₁ (Fig. 1) der Umfangsrille 1 beträgt.

Gemäß Fig. 2 reicht der Pfadabschnitt 11 - bezogen auf die Vorsprungkanten 7c - bis zu den Wendepunkten Pw und ist am Niveau der Deckflächen 7a daher durch die mittleren Kantenabschnitte 7c' begrenzt. Der Pfadabschnitt 11 weist in Umfangsrichtung eine zwischen den Wendepunkten Pw einer der Vorsprungkanten 7c gemessene Länge l₂ von 25% bis 35% der maximale Länge l₁ auf. Die mittleren Kantenabschnitte 7c' verlaufen bezogen auf eine ihre Enden verbindende Linie in Umfangsrichtung und sind Draufsicht leicht konkav zueinander gewölbt, sodass sich die Engstelle des Rillenpfades 8 bei der Ebene E₁ befindet. Alternativ können die mittleren Kantenabschnitte 7c' in Draufsicht gerade in Umfangsrichtung verlaufen, sodass die Engstelle des Rillenpfades 8 durch den Pfadabschnitt 10 gebildet ist.

Wie Fig. 1 und Fig. 2 zeigen, sind die bereits erwähnten Vorsprungaufsätze 9 in Draufsicht und in Umfangsrichtung ebenfalls langgestreckt sowie gleichschenkelig-trapezartig gestaltet, wobei die Basis des Trapezes an der jeweiligen Rillenflanke 5, 6 bzw. der jeweiligen Übergangsrundung 4b liegt. Die Vorsprungaufsätze 9 sind von den Vorsprüngen 7 überragt, in radialer Richtung durch eine parallel zur Laufstreifenperipherie ausgerichtete Deckfläche 9a begrenzt (Fig. 3), enden in radialer Richtung - ermittelt gegenüber dem tiefsten Punkt bzw. tiefsten Bereich der Umfangsrille 1 - in einer Höhe h₂ (Fig. 3) von 2,6 mm bis 3,4 mm, insbesondere von 3,0 mm, und weisen in Umfangsrichtung eine Länge l₃ (Fig. 2) von 30% bis 50%, insbesondere von bis zu 40%, der Länge l₁ der Vorsprünge 7 auf.

Beim gezeigten Ausführungsbeispiel ist in der schulterseitigen Profilrippe 2 neben dem Vorsprüngen 7 eine in axialer Richtung verlaufende, vor der Umfangsrille 1 in einem an der Laufstreifenperipherie in axialer Richtung ermittelten Abstand a₁ (Fig. 2) von vorzugsweise 2,5 mm bis 5,0 mm endende Querrille 12 ausgebildet, welche an der Außenfläche der Profilrippe 2 eine Breite B₂ (Fig. 2) von beispielsweise 2,0 mm bis 5,0 mm und in radialer Richtung eine innerhalb der Bodenaufstandsfläche vorzugsweise mit der Profiltiefe T₁ übereinstimmende Tiefe T₂ (Fig. 4) aufweist. Wie insbesondere Fig. 4 zeigt, verläuft zwischen der Querrille 12 und dem Pfadabschnitt 11 des Rillenpfades 8 ein auf Profiltiefe T₁ liegender Kanal 13. Über die gesamte Erstreckung des Kanals 13 mündet in diesen ein sich in radialer Richtung erstreckender Einschnitt 14 (siehe auch Fig. 1), welcher zwischen der Querrille 12 und der Umfangsrille 1 verläuft, eine Breite von 0,4 mm bis 1,2 mm aufweist und im an die Profilrippe 2 angrenzenden Vorsprung 7, inklusive Vorsprungaufsatz 9, fortgesetzt ist (Fig. 1). Der Kanal 13 weist einen gerundeten, beim Ausführungsbeispiel kreisrunden, Querschnitt mit einem Durchmesser d₁ (Fig. 5) auf, welcher derart gewählt ist, dass der Kanal 13 den Einschnitt 14, im Querschnitt betrachtet, an jeder Seite um 0,15 mm bis 2,0 mm, insbesondere um mindestens 0,5 mm, überragt.

Sowohl die Querrille 12, der Einschnitt 14 als auch der Kanal 13 sind bezüglich der erwähnten Ebene E₁ symmetrisch ausgeführt (Fig. 2, Fig. 4), erstrecken sich daher in axialer Richtung bzw. sind in axialer Richtung ausgerichtet.

Die Erfindung ist auf das beschriebene Ausführungsbeispiel nicht beschränkt.

Insbesondere können die Vorsprünge 7 auch in mittleren Umfangsrillen ausgebildet sein. Die Vorsprungaufsätze 9 sind optional.

### Bezugsziffernliste

- 1: schulterseitige Umfangsrille
- 2: schulterseitige Profilrippe
- 3: mittlere Profilrippe
- 4: Rillengrund
- 4a: Rillengrundabschnitt
- 4b: Übergangsrundung
- 5: Rillenflanke
- 6: Rillenflanke
- 7: Vorsprung
- 7a: Deckfläche
- 7b: Vorsprungflanke
- 7c: Vorsprungkante
- 7c': mittlerer Kantenabschnitt
- 7c": endseitiger Kantenabschnitt
- 8: Rillenpfad
- 9: Vorsprungaufsatz
- 9a: Deckfläche
- 10: Venturiabschnitt
- 11: Pfadabschnitt
- 12: Querrille
- 13: Kanal
- 14: Einschnitt
- a₁: Abstand
- B₁, B₂, b₁: Breite
- d₁: Durchmesser
- E₁, E₂: Ebene
- h₁, h₂: Höhe
- I₁: maximale Länge
- I₂, I₃: Länge
- P_{W}: Wendepunkt
- T₁: Profiltiefe
- T₂: Tiefe

## Patentansprüche

1. Fahrzeugluftreifen mit einem Laufstreifen mit zumindest einer, insbesondere gerade verlaufenden, auf Profiltiefe (T₁) ausgeführten, von Rillenflanken (5, 6) und einem im Querschnitt U-förmigen Rillengrund (4) begrenzten Umfangsrille (1) mit einer an der Laufstreifenperipherie in axialer Richtung ermittelten Breite (B₁), wobei am Rillengrund (4), gegebenenfalls unter Anbindung an die Rillenflanken (5, 6), eine Anzahl von über den Umfang der Umfangsrille (1) verteilt angeordneten, einander in axialer Richtung paarweise gegenüberliegenden Vorsprüngen (7) ausgebildet ist, zwischen welchen jeweils ein auf Profiltiefe (T₁) reichender, eine Engstelle aufweisender Rillenpfad (8) der Umfangsrille (1) verläuft, welcher bezüglich einer Ebene (E₁) symmetrisch gestaltet ist, die von der radialen Richtung und einer in Draufsicht Senkrechten auf die Mittellinie der Umfangsrille (1) aufgespannt ist,
wobei die Vorsprünge (7) an den Rillenflanken (5, 6) oder am Rillengrund (4) in Umfangsrichtung auslaufen und derart verlaufen, dass der Rillenpfad (8) bezüglich einer von der Mittellinie der Umfangsrille (1) und der radialen Richtung aufgespannten zweiten Ebene (E₂) symmetrisch verläuft und sich, in Draufsicht betrachtet, aus zwei trichterartig zur Engstelle verengenden Venturiabschnitten (10) zusammensetzt,
wobei die Venturiabschnitte (10) einander zugewandte Endabschnitte aufweisen, welche gemeinsam einen in Draufsicht in Umfangsrichtung langgestreckten Pfadabschnitt (11) des Rillenpfades (8) bilden, wobei sich die Engstelle des Rillenpfades (8) im Pfadabschnitt (11) befindet oder durch diesen gebildet ist,
**dadurch gekennzeichnet,**
**dass** der Pfadabschnitt (11) in Umfangsrichtung eine Länge (l₂) von 25% bis 35% der in Umfangsrichtung gemessenen maximalen Länge (l₁) des Rillenpfades (8) aufweist.

2. Fahrzeugluftreifen nach Anspruch 1, **dadurch gekennzeichnet, dass** die Vorsprünge (7) am Rillenpfad (8) jeweils eine Vorsprungkante (7c) aufweisen, wobei die Venturiabschnitte (10) an der Engstelle des Rillenpfades (8) eine zwischen den Vorsprungkanten (7c) in axialer Richtung ermittelte Breite (b₁) von mindestens 1,0 mm und höchstens 30% der Breite (B₁) Umfangsrille (1) aufweisen.

3. Fahrzeugluftreifen nach Anspruch 2, **dadurch gekennzeichnet, dass** die Breite (b₁) der Venturiabschnitte (10) an der Engstelle höchstens 25%, insbesondere höchstens 20%, der Breite (B₁) der Umfangsrille (1) beträgt.

4. Fahrzeugluftreifen nach Anspruch 2 oder 3, **dadurch gekennzeichnet, dass** die Vorsprungkanten (7c) vom Niveau der Profiltiefe (T₁) in radialer Richtung einen konstanten Abstand von 1,4 mm bis 2,0 mm, insbesondere von 1,6 mm, aufweisen.

5. Fahrzeugluftreifen nach einem der Ansprüche 1 bis 4, **dadurch gekennzeichnet, dass** die Vorsprünge (7) in radialer Richtung - ermittelt gegenüber dem tiefsten Punkt Umfangsrille (1) - eine konstante Höhe (h₁) von 1,4 mm bis 2,0 mm, insbesondere von 1,6 mm, aufweisen.

6. Fahrzeugluftreifen nach einem der Ansprüche 1 bis 5, **dadurch gekennzeichnet, dass** die Vorsprünge (7) in Umfangsrichtung eine maximale Länge (l₁) von 150% bis 300%, insbesondere von 180% bis 250%, besonders bevorzugt von 200% bis 230%, der Breite (B₁) der Umfangsrille (1) aufweisen.

7. Fahrzeugluftreifen mit einem Laufstreifen mit an die Umfangsrille (1) angrenzenden, in Umfangsrichtung umlaufenden Profilpositiven (2, 3), nach einem der Ansprüche 1 bis 6, **dadurch gekennzeichnet,**
**dass** in zumindest einem der Profilpositive (2, 3) im Bereich der Vorsprünge (7) vor der Umfangsrille (1) endende Querrillen (12) verlaufen, wobei im Inneren des Profilpositivs (2) zwischen der jeweiligen Querrille (12) und der Engstelle des Rillenpfades (8) ein Kanal (13) verläuft, in welchen ein im Profilpositiv (2) ausgebildeter, sich in radialer Richtung erstreckender, schmäler als der Kanal (13) ausgeführter Einschnitt (14) mit einer Breite von 0,4 mm bis 1,2 mm einmündet.

8. Fahrzeugluftreifen nach Anspruch 7, **dadurch gekennzeichnet, dass** der Kanal (13) den Einschnitt (14), im Querschnitt betrachtet, an jeder Seite um 0,15 mm bis 2,0 mm, insbesondere um mindestens 0,5 mm, überragt.

9. Fahrzeugluftreifen nach Anspruch 7 oder 8, **dadurch gekennzeichnet, dass** die Querrille (12), der Kanal (15) und der Einschnitt (14) bezüglich der Ebene (E₁), die von der radialen Richtung und der in Draufsicht Senkrechten auf die Mittellinie der Umfangsrille (1) aufgespannt ist, symmetrisch ausgeführt sind.

10. Fahrzeugluftreifen nach einem der Ansprüche 1 bis 9, **dadurch gekennzeichnet, dass** die Vorsprünge (7) in Draufsicht trapezförmig ausgebildet sind, wobei die Trapezbasis am Rillengrund (4) bzw. an der jeweiligen Rillenflanke (5, 6) der Umfangsrille (1) liegt.

11. Fahrzeugluftreifen nach einem der Ansprüche 1 bis 10, **dadurch gekennzeichnet, dass** auf den Vorsprüngen (7) jeweils ein am Rillengrund (4) und/oder an die jeweilige Rillenflanke (5, 6) angebundener Vorsprungaufsatz (9) ausgebildet ist, welcher an seinem äußeren Umfang vom zugehörigen Vorsprung (7) überragt ist und welcher in radialer Richtung - ermittelt gegenüber dem tiefsten Punkt der Umfangsrille (1) - eine konstante Höhe (h₂) von 2,6 mm bis 3,4 mm, insbesondere von 3,0 mm, aufweist, wobei der Vorsprungaufsatz (9) in Draufsicht vorzugsweise die Form eines Trapezes mit einer an der jeweiligen Rillenflanke (5, 6) bzw. am Rillengrund (4) der Umfangsrille (1) liegenden Trapezbasis aufweist.

12. Fahrzeugluftreifen nach einem der Ansprüche 1 bis 11, **dadurch gekennzeichnet, dass** die Paare von Vorsprüngen (7), welche innerhalb der Umfangsrille (1) in Umfangsrichtung aufeinanderfolgen, insbesondere übereinstimmende gegenseitige Abstände von 10,0 mm bis 70,0 mm, vorzugsweise von mindestens 30,0 mm, aufweisen.

13. Fahrzeugluftreifen nach einem der Ansprüche 1 bis 12, **dadurch gekennzeichnet, dass** innerhalb der Umfangsrille (1) mindestens fünf Paare von Vorsprüngen (7) ausgebildet sind.

## Claims

1. Pneumatic vehicle tyre having a tread with at least one, in particular straight, circumferential groove (1) which is formed at profile depth (T₁), is delimited by groove flanks (5, 6) and a groove base (4) of U-shaped cross section, and has a width (B₁) which is ascertained on the tread periphery in the axial direction, wherein a number of projections (7), which are arranged distributed over the circumference of the circumferential groove (1) and are situated opposite one another in pairs in the axial direction, is formed on the groove base (4), possibly with connection to the groove flanks (5, 6), a groove path (8) of the circumferential groove (1), which groove path reaches profile depth (T₁), has a constriction and is of symmetrical configuration with respect to a plane (E₁) which is spanned by the radial direction and a vertical to the centre line of the circumferential groove (1) in plan view, running between respective projections,
wherein the projections (7) end at the groove flanks (5, 6) or at the groove base (4) in the circumferential direction and run in such a way that the groove path (8) runs symmetrically with respect to a second plane (E₂), which is spanned by the centre line of the circumferential groove (1) and the radial direction, and, as viewed in plan view, is made up of two Venturi sections (10) which narrow in the manner of a funnel to form the constriction,
wherein the Venturi sections (10) have end sections which face one another and which together form a path section (11) of the groove path (8), which path section is elongate in the circumferential direction in plan view, wherein the constriction of the groove path (8) is located in the path section (11) or is formed by said path section,
**characterized**
**in that** the path section (11) has, in the circumferential direction, a length (l₂) of from 25% to 35% of the maximum length (l₁) of the groove path (8) measured in the circumferential direction.

2. Pneumatic vehicle tyre according to Claim 1, **characterized in that** the projections (7) on the groove path (8) each have a projection edge (7c), wherein the Venturi sections (10) at the constriction of the groove path (8) have a width (b₁), which is ascertained between the projection edges (7c) in the axial direction, of at least 1.0 mm and at most 30% of the width (B₁) of the circumferential groove (1).

3. Pneumatic vehicle tyre according to Claim 2, **characterized in that** the width (b₁) of the Venturi sections (10) at the constriction is at most 25%, in particular at most 20%, of the width (B₁) of the circumferential groove (1).

4. Pneumatic vehicle tyre according to Claim 2 or 3, **characterized in that** the projection edges (7c) are at a constant distance of from 1.4 mm to 2.0 mm, in particular of 1.6 mm, from the level of the profile depth (T₁) in the radial direction.

5. Pneumatic vehicle tyre according to one of Claims 1 to 4, **characterized in that** the projections (7) have a constant height (h₁) of from 1.4 mm to 2.0 mm, in particular of 1.6 mm, in the radial direction - ascertained in relation to the lowest point of the circumferential groove (1).

6. Pneumatic vehicle tyre according to one of Claims 1 to 5, **characterized in that** the projections (7) have a maximum length (l₁) of from 150% to 300%, in particular of from 180% to 250%, particularly preferably of from 200% to 230%, of the width (B₁) of the circumferential groove (1) in the circumferential direction.

7. Pneumatic vehicle tyre having a tread with profile positives (2, 3) which adjoin the circumferential groove (1) and run around in the circumferential direction according to one of Claims 1 to 6, **characterized**
**in that** transverse grooves (12) which end in front of the circumferential groove (1) run in at least one of the profile positives (2, 3) in the region of the projections (7), wherein a channel (13) runs in the interior of the profile positive (2) between the respective transverse groove (12) and the constriction of the groove path (8), a sipe (14) which is formed in the profile positive (2), extends in the radial direction, is designed to be narrower than the channel (13) and has a width of from 0.4 mm to 1.2 mm issuing into said channel.

8. Pneumatic vehicle tyre according to Claim 7, **characterized in that** the channel (13) protrudes beyond the sipe (14), as viewed in cross section, by from 0.15 mm to 2.0 mm, in particular by at least 0.5 mm, on each side.

9. Pneumatic vehicle tyre according to Claim 7 or 8, **characterized in that** the transverse groove (12), the channel (15) and the sipe (14) are of symmetrical design with respect to the plane (E₁) which is spanned by the radial direction and the vertical to the centre line of the circumferential groove (1) in plan view.

10. Pneumatic vehicle tyre according to one of Claims 1 to 9, **characterized in that** the projections (7) are of trapezoidal design in plan view, wherein the base of the trapezoid lies on the groove base (4) or on the respective groove flank (5, 6) of the circumferential groove (1).

11. Pneumatic vehicle tyre according to one of Claims 1 to 10, **characterized in that** a projection attachment (9) which is integrally formed on the groove base (4) and/or on the respective groove flank (5, 6) is formed on the respective projections (7), the associated projection (7) protruding beyond said projection attachment at its outer circumference and said projection attachment having a constant height (h₂) of from 2.6 mm to 3.4 mm, in particular of 3.0 mm, in the radial direction - ascertained in relation to the lowest point of the circumferential groove (1), wherein the projection attachment (9) preferably has, in plan view, the shape of a trapezoid with a trapezoid base which is situated on the respective groove flank (5, 6) or on the groove base (4) of the circumferential groove (1).

12. Pneumatic vehicle tyre according to one of Claims 1 to 11, **characterized in that** the pairs of projections (7) which follow one another in the circumferential direction within the circumferential groove (1) are at, in particular, corresponding mutual distances of from 10.0 mm to 70.0 mm, preferably of at least 30.0 mm.

13. Pneumatic vehicle tyre according to one of Claims 1 to 12, **characterized in that** at least five pairs of projections (7) are formed within the circumferential groove (1).

## Revendications

1. Pneumatique de véhicule avec une bande de roulement avec au moins une rainure circonférentielle (1), notamment rectiligne, réalisée à la profondeur de profil (T₁), délimitée par des flancs de rainure (5, 6) et un fond de rainure (4) de section transversale en forme de U, avec une largeur (B₁) déterminée en direction axiale à la périphérie de la bande de roulement, un nombre de saillies (7) agencées en étant réparties sur la circonférence de la rainure circonférentielle (1), opposées les unes aux autres par paires dans la direction axiale, étant réalisées sur le fond de rainure (4), éventuellement en liaison avec les flancs de rainure (5, 6), entre lesquelles s'étend respectivement un chemin de rainure (8) de la rainure circonférentielle (1) s'étendant jusqu'à la profondeur de profil (T₁), présentant un point étroit, lequel chemin de rainure est configuré de manière symétrique par rapport à un plan (E₁) qui est défini par la direction radiale et une perpendiculaire à la ligne médiane de la rainure circonférentielle (1) en vue de dessus,
les saillies (7) se terminant sur les flancs de rainure (5, 6) ou sur le fond de rainure (4) dans la direction circonférentielle et s'étendant de telle sorte que le chemin de rainure (8) s'étend symétriquement par rapport à un deuxième plan (E₂) défini par la ligne médiane de la rainure circonférentielle (1) et la direction radiale et se compose, considéré en vue de dessus, de deux sections de venturi (10) se rétrécissant à la manière d'un entonnoir vers le point étroit,
les sections de venturi (10) présentant des sections d'extrémité tournées l'une vers l'autre, qui forment ensemble une section de chemin (11), allongée en vue de dessus dans la direction circonférentielle, du chemin de rainure (8), le point étroit du chemin de rainure (8) se trouvant dans la section de chemin (11) ou étant formé par celle-ci,
**caractérisé en ce que**
la section de chemin (11) présente une longueur (l₂) dans la direction circonférentielle de 25 % à 35 % de la longueur maximale (l₁) du chemin de rainure (8) mesurée dans la direction circonférentielle.

2. Pneumatique de véhicule selon la revendication 1, **caractérisé en ce que** les saillies (7) sur le chemin de rainure (8) présentent chacune un bord de saillie (7c), les sections de venturi (10) au niveau du point étroit du chemin de rainure (8) présentant une largeur (b₁) déterminée entre les bords de saillie (7c) dans la direction axiale d'au moins 1,0 mm et d'au plus 30 % de la largeur (B₁) de la rainure circonférentielle (1).

3. Pneumatique de véhicule selon la revendication 2, **caractérisé en ce que** la largeur (b₁) des sections de venturi (10) au niveau du point étroit est au plus de 25 %, notamment au plus de 20 %, de la largeur (B₁) de la rainure circonférentielle (1).

4. Pneumatique de véhicule selon la revendication 2 ou 3, **caractérisé en ce que** les bords de saillie (7c) présentent une distance constante de 1,4 mm à 2,0 mm, notamment de 1,6 mm, par rapport au niveau de la profondeur de profil (T₁) dans la direction radiale.

5. Pneumatique de véhicule selon l'une quelconque des revendications 1 à 4, **caractérisé en ce que** les saillies (7) présentent dans la direction radiale - déterminée par rapport au point le plus bas de la rainure circonférentielle (1) - une hauteur constante (h₁) de 1,4 mm à 2,0 mm, notamment de 1,6 mm.

6. Pneumatique de véhicule selon l'une quelconque des revendications 1 à 5, **caractérisé en ce que** les saillies (7) présentent une longueur maximale (l₁) dans la direction circonférentielle de 150 % à 300 %, notamment de 180 % à 250 %, de manière particulièrement préférée de 200 % à 230 %, de la largeur (B₁) de la rainure circonférentielle (1).

7. Pneumatique de véhicule avec une bande de roulement avec des éléments positifs de profil (2, 3) adjacents à la rainure circonférentielle (1), s'étendant dans la direction circonférentielle, selon l'une des revendications 1 à 6, **caractérisé en ce que**
dans au moins l'un des éléments positifs de profil (2, 3) s'étendent, dans la zone des saillies (7), des rainures transversales (12) se terminant avant la rainure circonférentielle (1), un canal (13) s'étendant à l'intérieur de l'élément positif de profil (2) entre la rainure transversale respective (12) et le point étroit du chemin de rainure (8), dans lequel débouche une entaille (14) réalisée dans l'élément positif de profil (2), s'étendant en direction radiale, plus étroite que le canal (13), d'une largeur de 0,4 mm à 1,2 mm.

8. Pneumatique de véhicule selon la revendication 7, **caractérisé en ce que** le canal (13), considéré en coupe transversale, dépasse l'entaille (14) de chaque côté de 0,15 mm à 2,0 mm, notamment d'au moins 0,5 mm.

9. Pneumatique de véhicule selon la revendication 7 ou 8, **caractérisé en ce que** la rainure transversale (12), le canal (15) et l'entaille (14) sont symétriques par rapport au plan (E₁) défini par la direction radiale et la perpendiculaire, en vue de dessus, à la ligne médiane de la rainure circonférentielle (1).

10. Pneumatique de véhicule selon l'une quelconque des revendications 1 à 9, **caractérisé en ce que** les saillies (7) sont réalisées sous forme trapézoïdale en vue de dessus, la base du trapèze étant située sur le fond de rainure (4) ou sur le flanc de rainure respectif (5, 6) de la rainure circonférentielle (1).

11. Pneumatique de véhicule selon l'une quelconque des revendications 1 à 10, **caractérisé en ce que** sur chacune des saillies (7) est réalisée une pièce rapportée de saillie (9) reliée au fond de rainure (4) et/ou au flanc de rainure (5, 6) respectif, qui est dépassée sur sa circonférence extérieure par la saillie (7) correspondante et qui présente dans la direction radiale - déterminée par rapport au point le plus bas de la rainure circonférentielle (1) - une hauteur (h₂) constante de 2,6 mm à 3,4 mm, notamment de 3,0 mm, la pièce rapportée de saillie (9) présentant de préférence, en vue de dessus, la forme d'un trapèze avec une base de trapèze située sur le flanc de rainure (5, 6) respectif ou sur le fond de rainure (4) de la rainure circonférentielle (1).

12. Pneumatique de véhicule selon l'une quelconque des revendications 1 à 11, **caractérisé en ce que** les paires de saillies (7) qui se succèdent dans la direction circonférentielle à l'intérieur de la rainure circonférentielle (1) présentent notamment des distances mutuelles concordantes de 10,0 mm à 70,0 mm, de préférence d'au moins 30,0 mm.

13. Pneumatique de véhicule selon l'une quelconque des revendications 1 à 12, **caractérisé en ce qu'**au moins cinq paires de saillies (7) sont réalisées à l'intérieur de la rainure circonférentielle (1).
